# EUROPÄISCHE PATENTANMELDUNG

(11) **EP 1 707 885 A2**
(43) Veröffentlichungstag der Anmeldung: **04.10.2006**
(21) Anmeldenummer: 06003816.3
(22) Anmeldetag: 24.02.2006
(51) Int. Cl.: F24D 19/00

(54) **Verfahren zum Betrieb einer Heizungsanlage**

(30) Priorität: 14.03.2005 DE 102005011992
(71) Anmelder: Honeywell Technologies Sarl ECC, 1110 Morges (CH)
(72) Erfinder: Hilborne-Clarke, Axel, 59821 Arnsberg (DE)
(74) Vertreter: Graefe, Jörg

(57) **Zusammenfassung**

Die vorliegende Erfindung betrifft ein Verfahren zum Betrieb einer Warmwasserheizungsanlage, gekennzeichnet durch die Verwendung eines Feststoffs, welcher sich bei Inkontakttreten mit Wasser allmählich auflöst, wobei ein Element (11) aus dem Feststoff im Bereich eines Ventilsitzes (24) angeordnet wird.

## Beschreibung

Die vorliegende Erfindung betrifft ein Verfahren zum Betrieb einer Warmwasser-Heizungsanlage umfassend die Verwendung eines insbesondere antikorrosiv wirkenden Feststoffs, welcher sich bei Inkontakttreten mit Wasser allmählich auflöst.

Das japanische Patent Abstract 9280477 beschreibt ein Verfahren der eingangs genannten Gattung, bei dem man eine Bypass-Anordnung zu einer Heizungsrohrleitung schafft mit einem Gehäuse, in das ein etwa zylindrischer Block eines antikorrosiv wirkenden Feststoffs eingesetzt ist. Dieser Feststoffblock weist eine mittige Bohrung auf, die vergleichsweise klein ist und es zulässt, dass anfangs eine geringere Menge Wasser, die durch die Bypass-Anordnung strömt, durch die Bohrung in dem Feststoff hindurchtritt. Allmählich erweitert sich diese Bohrung, da sich das Material langsam auflöst. Durch die Vergrößerung des Strömungsquerschnitts in diesem antikorrosiv wirkenden Material beschleunigt sich dessen Auflösung, bis schließlich eine vollständige Auflösung eintritt. Dieser antikorrosiv wirkende Stoff liegt dann in dem Wasser der Heizungsanlage gelöst vor und soll über einen längeren Zeitraum eine Korrosion der Rohrleitungen und sonstiger Anlagenteile der Heizungsanlage verhindern.

Das Problem der Korrosion beziehungsweise Steinbildung durch Ablagerung von im Wasser einer Heizungsanlage gelösten Stoffen ist seit langem bekannt. Unter anderem wird die Korrosion durch in das Heizwasser eindiffudierenden Sauerstoff hervorgerufen beziehungsweise beschleunigt. Auch ein tiefer pH-Wert des für die Füllung der Anlage verwendeten Leitungswassers beziehungsweise eine erhöhte elektrische Leitfähigkeit begünstigt die Korrosion. Dies führt zur Verschlammung des Heizsystems durch Korrosionsprodukte.

Die Wasserbeschaffenheit ist lokal sehr unterschiedlich, insbesondere kann die Wasserhärte je nach Herkunft des Systemwassers stark variieren und es liegen die unterschiedlichsten Salze in gelöster Form im Systemwasser vor. Ein weiteres Problem ergibt sich daraus, dass in den heutigen Heizungsanlagen für Rohre und andere Anlagenteile sehr unterschiedliche Werkstoffe verwendet werden, beispielsweise Metalle wie Kupfer, Messing, Rotguss, Stahl, aber auch Kunststoffe sowie Verbundmaterialien.

Eine mögliche Lösung im Stand der Technik sieht vor, dass dem Systemwasser ein chemischer Korrosionshemmer zudosiert wird. Die Überwachung einer korrekten Dosierung solcher Korrosionsinhibitoren ist jedoch zeit- und kostenintensiv. Werden die Inhibitoren in falscher Konzentration zugegeben, kann das Korrosionsrisiko verschärft werden.

Bei einer alternativen bekannten Lösung baut man in das Heizsystem in einem Nebenanschluss einen Reaktionsbehälter mit Magnesiumannoden ein. Durch die Reaktion mit dem in Lösung gehenden Opfermetall (Magnesium) wird die Konzentration des in das Wasser diffundierenden Luftsauerstoffes auf einen vernachlässigbaren Wert abgesenkt. Das bei diesem Vorgang entstehende Magnesiumhydroxid begünstigt den Anstieg des pH-Wertes in einen optimalen Bereich. In der Folge sinkt, abhängig von der Wasserzusammensetzung die elektrische Leitfähigkeit des Systemwassers, bedingt durch die teilweise ausfallende Wasserhärte. Es entsteht somit ein salzarmes alkalisches Wasser mit einer minimalen Sauerstoffkonzentration.

Es gibt auch Lösungen, bei denen Heizungsreiniger verwendet werden, die bereits entstandene Eisenoxidschlämme, leichte Eisenoxidablagerungen und daran gebundene Rückstände entfernen.

Die dazu verwendeten Mittel sollen nicht ätzend und nicht giftig sein und funktionieren im Prinzip dadurch, dass sie einen stabilen löslichen Komplex mit den abgelagerten Metalloxiden bilden, die anschließend aus dem System ausgespült werden können.

Bevor eine Warmwasser-Heizungsanlage oder eine ähnlich aufgebaute Anlage in Betrieb genommen werden kann, muss sie gespült werden. Dadurch werden Rückstände, die bei der Produktion der einzelnen Komponenten und/oder beim Bau der Anlage anfallen, aus der Anlage gespült. Geschieht dies nicht, können diese Rückstände zu Problemen im Betrieb führen, wenn sie sich zum Beispiel bei Regelventilen zwischen Ventilsitz und Regulierkegel verkeilen. Für den Spülvorgang müssen alle Ventile sich in der vollständigen Offenstellung befinden, damit der maximale Querschnitt für den Spülvorgang zur Verfügung steht und auch größere Rückstände aus der Anlage gespült werden können, zum Beispiel Schweißperlen. Bei automatischen Differenzdruckregulierventilen bedeutet dies, dass das Ventil erst dann endmontiert werden kann, wenn der Spülvorgang abgeschlossen ist. Dies liegt daran, dass solche Ventile den Druck von zwei Anlagenabschnitten (Vor- und Rücklauf) abnehmen und die Druckverhältnisse beim Spülen der Anlage ausreichen, um das Ventil in den Regelbereich zu fahren und so den zur Verfügung stehenden Querschnitt für den Spülvorgang zu verkleinern.

Da der Anlagenbauer oft aus Kostengründen nicht bereit ist, die Endmontage zu verschieben, oder das Ventil aus mangelnder Kenntnis des oben genannten Sachverhalts vor dem Spülvorgang endmontiert, ist hier eine mögliche Fehlerursache gegeben, die oft zu Anlagenproblemen führt.

Ausgehend von dem zuvor zitierten Stand der Technik besteht die Aufgabe der vorliegenden Erfindung darin, ein Verfahren zum Betrieb einer Warmwasser-Heizungsanlage der eingangs genannten Gattung zur Verfügung zu stellen, welches einen Zusatznutzen beim Spülvorgang anlässlich der Inbetriebnahme der Heizungsanlage schafft.

Die Lösung dieser Aufgabe liefert ein erfindungsgemäßes Verfahren der eingangs genannten Gattung mit den kennzeichnenden Merkmalen des Hauptanspruchs. Erfindungsgemäß ist vorgesehen, dass man ein Element aus einem zum Beispiel korrosionshemmenden Feststoff, welcher sich bei Inkontakttreten mit Wasser allmählich auflöst, im Bereich eines Ventilsitzes anordnet.

Vorzugsweise wird ein Element, welches zum Beispiel aus einem wasserlöslichen Korrosionsschutzmittel besteht im Bereich zwischen einem Ventilsitz und dem dazugehörigen Ventilkegel angeordnet. Beispielsweise kann ein solches Element während der Endmontage zwischen Ventilsitz und Ventilkegel verklemmt werden. Das Element besteht beispielsweise aus einem hartgepressten wasserlöslichen Feststoff, zum Beispiel einem Korrosionsschutzkonzentrat. Es wird beispielsweise ein Material verwendet, welches ursprünglich in Pulverform vorliegt und zu dem Feststoffelement gepresst wird, oder aber alternativ dazu wird ein gießfähiges oder auf andere Weise formbares Material für das Element verwendet.

Gemäß einer bevorzugten Weiterbildung der Erfindung wird das Element mit einer derartigen Umrissform ausgebildet, dass einerseits während des Spülvorgangs der Anlage verhindert wird, dass der Ventilkegel zufährt beziehungsweise in die Regelstellung fährt, so dass sich das Regelventil während des Spülvorgangs in der Offenstellung befindet und in dieser durch das Element fixiert ist.

Andererseits ist es vorteilhaft, wenn das Element eine derartige Form aufweist, dass in der Spülphase der verfügbare Durchflussquerschnitt nicht oder so wenig wie möglich verringert wird.

Für die Formgebung des erfindungsgemäßen Elements bieten sich zahlreiche Varianten an. Das Element kann beispielsweise eine einfache geometrische Form aufweisen, zum Beispiel die eines Quaders, eines Zylinders oder eines polygonalen prismatischen Körpers, der im Bereich zwischen Ventilsitz und Ventilkegel eingeklemmt wird. Mit der Zeit löst sich dann das Element vollständig auf und das Ventil kann später ganz normal im Regelbetrieb arbeiten.

Alternativ dazu kann beispielsweise vorgesehen sein, dass das Element Öffnungen, Bohrungen, Durchbrüche oder dergleichen aufweist, die zu Beginn der Spülphase von dem Anlagenwasser durchströmt werden. Der Strömungsquerschnitt des Ventils wird dabei nicht reduziert und gegebenenfalls wird der Vorgang der Auflösung des Elements beschleunigt. Wenn es sich wie bei der zuvor genannten Variante um ein kompaktes Element handelt, erfolgt die Strömung im Ventilbereich zu Anfang der Spülphase um das Element herum. Das Element muss also entsprechend angeordnet beziehungsweise dimensioniert werden.

Durch die erfindungsgemäße Lösung wird erreicht, dass insbesondere automatische Differenzdruckregelventile während eines Spülvorgangs in der Offenstellung fixiert werden. Innerhalb eines gewissen Zeitraums, zum Beispiel innerhalb von 24 oder 48 Stunden sollte sich das Element im Anlagenwasser aufgelöst haben, so dass dann die Fixierung der Regelventile aufgehoben und diese vollständige einsatzfähig sind. Durch die Auflösung des Elements erhält die Anlage zum Beispiel eine Grundversorgung an Korrosionsschutzmittel, so dass sich ein späteres Zudosieren eines solchen Korrosionsschutzmittels, was mit einem zusätzlichen Arbeitsgang verbunden ist, erübrigt. Vorzugsweise wird für das Element ein Material mit Korrosionsschutzeigenschaften verwendet, welches sich Hartpressen oder Gießen lässt.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1: einen Längsschnitt durch ein Regelventil mit einem zwischen Ventilkegel und Ventilsitz angeordneten erfindungsgemäßen Element aus Korrosionsschutzmaterial;
- Fig. 2: eine vergrößerte Detailansicht im Bereich des Ventildurchgangs mit Anordnung eines Elements aus Korrosionsschutzmaterial gemäß einer Variante der Erfindung;
- Fig. 3: eine Einzeldarstellung eines Korrosionsschutzelements gemäß einer Variante der Erfindung im Schnitt;
- Fig. 4: eine Draufsicht auf ein Korrosionsschutzelement gemäß Fig. 3,
- Fig. 5: eine vergrößerte Ansicht eines Ausschnitts der Längsschnittdarstellung durch das Regelventil gemäß Fig. 1.

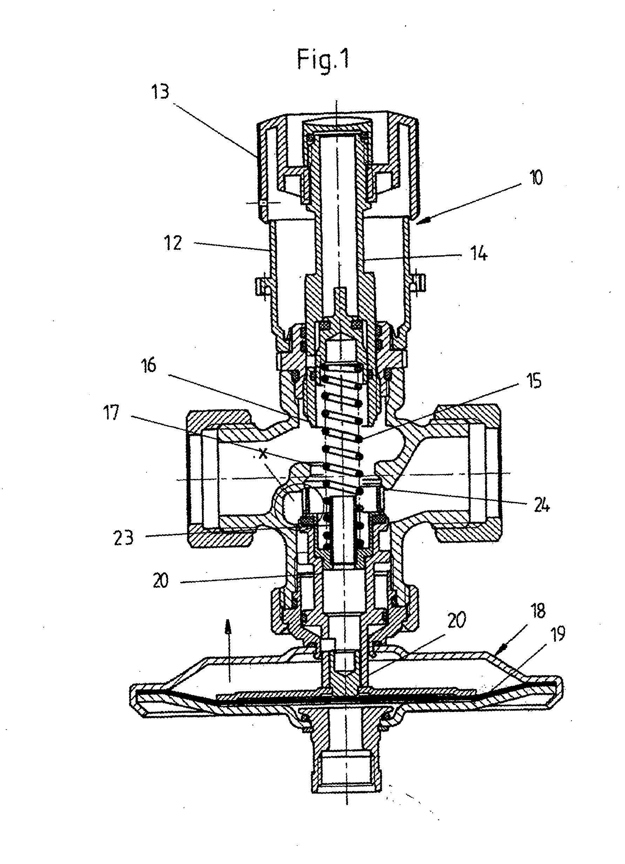

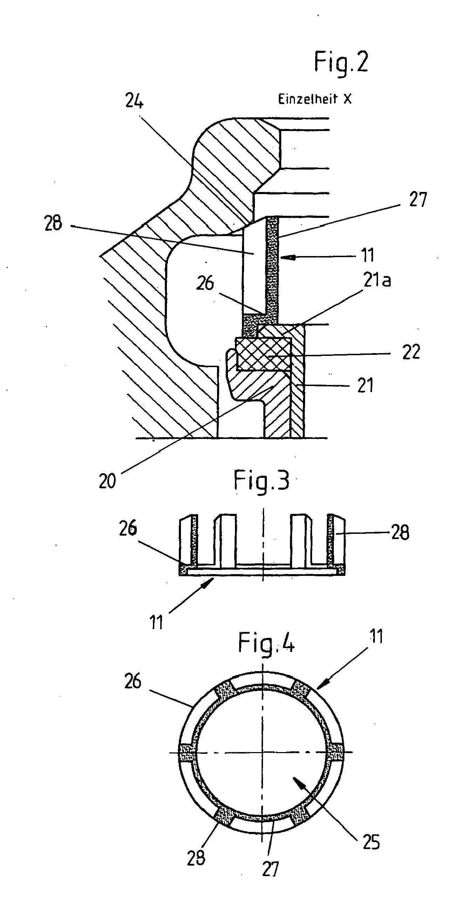

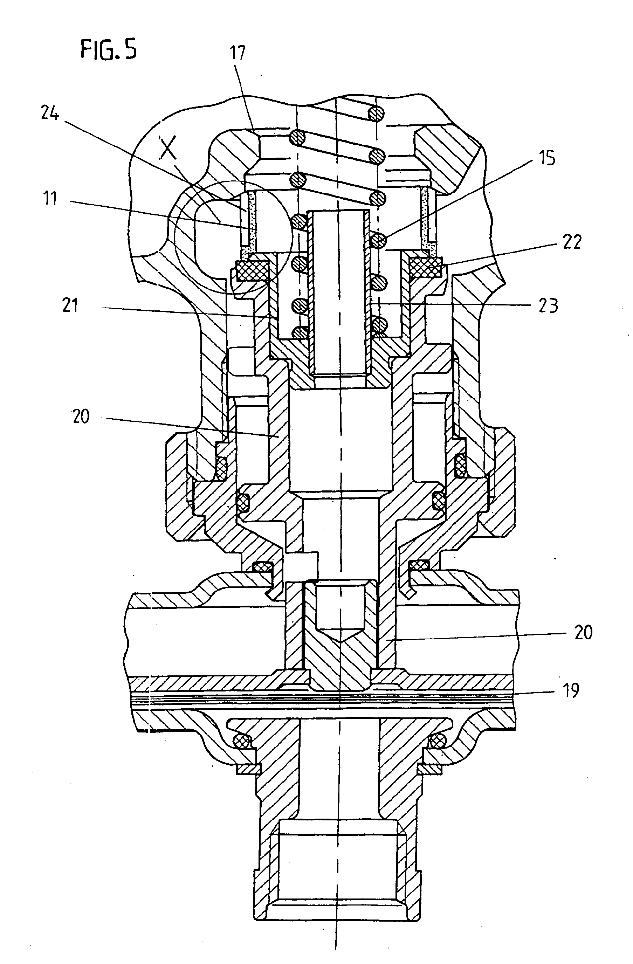

Nachfolgend wird zunächst auf Fig. 1 und Fig. 5 Bezug genommen. Die Darstellung zeigt ein Regelventil, welches insgesamt mit dem Bezugszeichen 10 bezeichnet ist, bei dem ein Element 11 aus Korrosionsschutzmaterial gemäß der vorliegenden Erfindung zur Anwendung kommen kann. Das Regelventil 10 wird jedoch nicht in seinen Einzelheiten beschrieben, da die wesentlichen Funktionen bekannt sind und es auf die funktionellen Details im Rahmen der vorliegenden Erfindung nicht ankommt. Das Regelventil 10 umfasst ein Ventiloberteil 12 mit einem Handrad 13, mittels dessen eine Voreinstellung über eine Spindel 14 möglich ist, die durch die Kraft einer Druckfeder 15 vorbelastet ist. Am in der Zeichnung unteren vorderen Ende der Spindel 14 ist ein Ventilkegel 16 angeordnet, so dass man durch Verstellung der Spindel 14 und Bewegen des Ventilkegels 16 gegen den Ventilsitz 17 den oberen Durchgang verschließen und somit das Regelventil vollständig absperren kann. Dem Handrad 13 und der Voreinstellung gegenüberliegend ist ein Membranregler 18 mit einer Membran 19 vorgesehen, welche durch den Wasserdruck des Vorlaufs beaufschlagt wird. Bewegt sich die Membran 19 in der Zeichnung in Pfeilrichtung nach oben, dann führt dies zu einer Axialverschiebung des Ventilkegels 20, dessen der Membran 19 abgewandtes Ende man in Fig. 2 und Fig. 5 erkennen kann. Der Ventilkegel 20 nimmt in diesem Bereich eine Hülse 21 auf und ein radial nach außen ragender Schenkel 21 a dieser konzentrisch von dem Ventilkegel 20 aufgenommenen Hülse dient dazu, eine Dichtung 22 aufzunehmen, die zwischen Hülse 21 und endseitigem Bereich des Ventilkegels 20 angeordnet ist. In die Hülse 21 ist wiederum konzentrisch ein Hohlstift 23 eingesetzt, der zur Zentrierung des einen Endbereichs der Druckfeder 15 dient. In diesem Endbereich hat die Druckfeder 15 ihr Widerlager an einer Anlagefläche 21 a der Hülse. An ihrem anderen Ende hat die Druckfeder 15 ihr Widerlager an einem Bauteil im Inneren des Ventilkegels 16 der Voreinstelleinrichtung. Der Ventilkegel 20 mit der Dichtung 22 wirkt gegen den zweiten in Fig. 1 unteren Ventilsitz 24, und zwar dann, wenn das Element 11 aus dem Korrosionsschutzmaterial sich aufgelöst hat und das Ventil in den Regelbetrieb übergegangen ist.

Weitere Details betreffend das Element 11 aus dem Korrosionsschutzmaterial werden nun nachfolgend unter Bezugnahme auf die Fig. 2 bis 4 näher erläutert. Diese Detailansicht des Längsschnitts gemäß Fig. 2 zeigt das noch vollständig erhaltene Element 11 aus Korrosionsschutzmaterial bei Inbetriebnahme des Regelventils 10. Man erkennt, dass sich das Element 11 zwischen dem unteren Ventilsitz 24 und dem diesem zugeordneten Ventilkegel 20 sowie der von diesem aufgenommenen Hülse 21 verklemmt. Durch das Element 11 wird das Ventil in der Offenstellung gehalten. Bei der Inbetriebnahme wird die Heizungsanlage gespült, was dazu führt, dass sich das Element 11 aus dem Korrosionsschutzmaterial allmählich auflöst, beispielsweise über einen Zeitraum von 24 oder 48 Stunden oder dergleichen. Wenn sich das Element 11 aufgelöst hat, ist dadurch die Hemmung des Ventilkegels 20 aufgehoben, das Ventil kann im Regelbereich gefahren werden, so dass dann gegebenenfalls auch eine vollständige Schließstellung möglich ist, bei der der Ventilkegel 20 gegen den Ventilsitz 24 fährt.

Der genauere Aufbau des Elements 11 in dem vorliegenden Ausführungsbeispiel ergibt sich aus den Ansichten gemäß Fig. 3 und 4. Man erkennt, dass das Element 11 ringförmig ausgebildet ist. Das Element 11 kann also durch die zentrische Öffnung 25 hindurch von dem Heizmedium durchströmt werden. Das Element 11 hat an der dem Ventilkegel 20 zugewandten Seite einen flanschartigen Kragen 26, der durch einen Vorsprung radial nach außen gebildet ist. Eine etwa zylindrische Hülse 27 des Elements 11 wird außenseitig durch radial nach außen ragende Rippen 28 verstärkt, die über den Umfang des Elements verteilt angeordnet sind. Es sind in dem Ausführungsbeispiel gemäß Fig. 4 sechs solcher Rippen 28 vorhanden. Aus Fig. 2 kann man erkennen, dass an der dem Ventilsitz 24 zugewandten Seite die Rippen 28 eine Abschrägung aufweisen, wodurch sich in vorteilhafter Weise eine Anpassung an die Form des Ventilsitzes 24 ergibt, die eine bessere Anlage des Elements 11 am Ventilsitz 24 gewährleistet. Am anderen Ende übergreift das Element einen Flansch 21a der Hülse 21 und grenzt außerdem an die Dichtung 22 an. Die Rippen 28 dienen zur Aussteifung und Stabilisierung des Elements 11, das beispielsweise aus einem pulverförmigen Material gepresst werden kann oder gegebenenfalls auch gegossen wird.

## Patentansprüche

1. Verfahren zum Betrieb einer Warmwasserheizungsanlage, **gekennzeichnet durch** die Verwendung eines Feststoffs, welcher sich bei Inkontakttreten mit Wasser allmählich auflöst,
wobei ein Element (11) aus dem Feststoff im Bereich eines Ventilsitzes (24) angeordnet wird.

2. Verfahren nach Anspruch 1, **dadurch gekennzeichnet, dass** das Element (11) aus dem Feststoff zwischen einem Ventilsitz (24) und einem Ventilkegel (20) festgeklemmt ist.

3. Verfahren zum Betrieb einer Warmwasserheizungsanlage, **dadurch gekennzeichnet, dass** ein Element (11) aus einem sich auflösenden Festkörper bei geöffnetem Ventilkegel (20) im Bereich eines Ventilsitzes (24) eines Regelventils angeordnet wird, wobei der Strömungsquerschnitt des Regelventils mindestens teilweise frei bleibt, danach ein Spülvorgang der Heizungsanlage erfolgt, das Element allmählich von dem Heizmedium herausgespült und/oder aufgelöst wird und danach die Anlage in den Regelbetrieb übergeht.

4. Anordnung einer Warmwasser-Heizungsanlage umfassend die Verwendung eines Feststoffs, welcher sich bei Inkontakttreten mit Wasser allmählich auflöst,
**dadurch gekennzeichnet, dass** ein Element (11) aus dem Feststoff im Bereich eines Ventilsitzes (24) angeordnet ist.

5. Anordnung nach Anspruch 4, **dadurch gekennzeichnet, dass** das Element (11) aus dem Feststoff in einer geöffneten Stellung eines Regelventils zwischen einem Ventilsitz (24) und einem Ventilkegel (20) verklemmt ist.

6. Anordnung nach Anspruch 5, **dadurch gekennzeichnet, dass** das Element (11) so geformt ist, dass es mindestens teilweise einen axialen und/oder einen radialen Strom des Heizmittels durch das Regelventil zulässt.

7. Anordnung nach Anspruch 5 oder 6, **dadurch gekennzeichnet, dass** das Element (11) als kompakter Körper mit wenigstens einer Bohrung, einem Durchbruch, einem Kanal oder dergleichen ausgebildet ist.

8. Anordnung nach einem der Ansprüche 5 oder 6, **dadurch gekennzeichnet, dass** das Element (11) etwa ringförmig ausgebildet ist und einen axialen Durchgang (25) für das Heizmedium aufweist.

9. Anordnung nach einem der Ansprüche 5, 6 oder 8, **dadurch gekennzeichnet, dass** das Element Rippen (28) zur Verstärkung/Aussteifung aufweist.

10. Anordnung nach einem der Ansprüche 5 bis 9, **dadurch gekennzeichnet, dass** das Element (11) mindestens eine an die Form des Ventilsitzes (24) angepasste Schräge aufweist.

11. Anordnung gemäß einem der Ansprüche 5 bis 10, **dadurch gekennzeichnet, dass** das Element (11) zwischen einer an einem Ventilkegel (20) angebrachten Dichtung (22) und einem Ventilsitz (24) angeordnet ist.

12. Element zur Verwendung in einem Verfahren zur Verringerung der Korrosion einer Warmwasser-Heizungsanlage, umfassend die Verwendung eines antikorrosiv wirkenden Feststoffs, welcher sich bei Inkontakttreten mit Wasser allmählich auflöst,
**gekennzeichnet durch** die Merkmale eines der Ansprüche 6 bis 10.
